# EUROPÄISCHE PATENTSCHRIFT

(11) **EP 0 542 206 B1**
(45) Veröffentlichungstag und Bekanntmachung des Hinweises auf die Patenterteilung: **24.01.1996**
(21) Anmeldenummer: 92119231.6
(22) Anmeldetag: 11.11.1992
(51) Int. Cl.: C09D 133/14, C09D 163/00, C09D 163/10

(54) **Bindemittelzusammensetzung, deren Herstellung, diese enthaltende Überzugsmittel und deren Verwendung**
Binder composition, its preparation, coating composition containing it and its use
Composition de liant, sa préparation, composition de revêtement contenant celui-ci et sa préparation

(30) Priorität: 15.11.1991 DE 4137615
(43) Veröffentlichungstag der Anmeldung: 19.05.1993
(73) Patentinhaber: Herberts Gesellschaft mit beschränkter Haftung, D-42285 Wuppertal (DE)
(72) Erfinder: Bederke, Klaus, Dr., W-4322 Sprockhövel (DE); Kleber, Hermann, W-5600 Wuppertal 21 (DE); Schubert, Walter, Dr., W-5600 Wuppertal 12 (DE); Brock, Thomas, Dr., W-5030 Hürth (DE); Sadowski, Fritz, Dr., W-5024 Brauweiler (DE); Löffler, Helmut, W-5040 Brühl (DE)
(74) Vertreter: Türk, Gille, Hrabal, Leifert

(56) Entgegenhaltungen:
- EP-A- 0 149 765
- EP-A- 0 476 388
- WO-A-91/02035

## Beschreibung

Die Erfindung betrifft eine Zweikomponenten-Bindemittelzusammensetzung, die für die Herstellung von Überzugsmitteln auf Lösemittelbasis und/oder wäßriger Basis geeignet ist; sie betrifft insbesondere eine Zweikomponenten-Bindemittelzusammensetzung für Lösemittel und/oder Wasser enthaltende Überzugsmittel, die eine oder mehrere spezifische Bindemittelkomponenten (A) und eine oder mehrere spezifische Polyaminhärter (B) enthält, ein Verfahren zu ihrer Herstellung sowie sie enthaltende Überzugsmittel und deren Verwendung zur Herstellung von Überzügen bzw. Lacken.

In der EP-A-0 002 801 sind Zweikomponenten-Lackbindemittel beschrieben, bei denen die Vernetzung der beiden Komponente durch die Reaktion von Amidoamiden mit Acryloyl-ungesättigten Gruppen erfolgt. Dabei bildet sich an der Oberfläche sehr rasch ein angetrockneter Lackfilm, die vollständige Aushärtung erfolgt aber erst nach mehreren Wochen.

In der EP-A-0 179 954 ist ein Zweikomponenten-Lackbindemittel beschrieben, in dem Epoxid-funktionalisierte Verbindungen mit Aminfunktionalisierten Vernetztern gehärtet werden. Diese Härter können zusätzlich durch Reaktion der Amingruppen mit Aldehyden oder Ketonen zu einer Schiff schen Base verkappt sein. Auch bei diesem System bildet sich ein harter und benzinbeständiger Film erst nach einigen Tagen.

In der älteren deutschen Patentanmeldung DE-A-40 27 259 ist ein Zweikomponentenlack beschrieben, in dem Epoxidund Acryloyl-funktionalisierte Verbindungen mit Amin-funktionalisierten Vernetzern gehärtet werden. Diese Härter können zusätzlich durch Reaktion der Amingruppen mit Aldehyden oder Ketonen zu einer Schiffschen Base verkappt sein. Nicht erwähnt ist darin die Herstellung und Verwendung eines Härters, der durch Umsetzung von α-Dimethyl-m-isopropenylbenzylisocyanat (hier stets als TMI bezeichnet) mit Mono- oder Diketiminen die eine OH- oder sec-NH-Gruppe tragen, hergestellt wurde.

Aufgabe der Erfindung ist die Bereitstellung einer Zweikomponenten-Bindemittelzusammensetzung die für lösemittelhaltige oder wäßrige Überzugsmittel geeignet ist und bereits bei niedrigen Temperaturen, beispielsweise bei Raumtemperatur, rasch zu vergilbungsfreien, lösemittel- und benzinbeständigen Überzügen mit insbesondere sehr guten Fülle/Glanz-Eigenschaften aushärtet.

Es hat sich gezeigt, daß diese Aufgabe durch ein Bindemittelsystem gelöst werden kann, bei dem ein Filmbildner, der sowohl Epoxid- als auch Acryloylgruppen in einem Zahlenverhältnis von 2 : 8 bis 8 : 2 enthält, mit einem Aminfunktionalisierten Härter, der verkappt sein kann, vernetzt wird. Die Kombination aus Epoxid- und Acryloylgruppen erlaubt ein rasches Antrocknen und eine schnelle Vernetzung, wobei auch ein gutes Abdunsten des Lösemittels aus einem das Bindemittelsystem enthaltenden Film gewährleistet ist. Durch die Verwendung eines polymeren Vernetzers erhält der Film einen sehr hohen Glanz und im Falle der Anlagerung eines hydroxyfunktionellen Ketimins an ein TMI-Copolymer über die entstandene Urethangruppe zudem eine hohe Flexibilität.

Gegenstand der Erfindung ist daher eine Bindemittelzusammensetzung für Lösemittel und/oder Wasser enthaltende Überzugsmittel, die enthält
A) eine oder mehrere Bindemittelkomponenten auf der Basis von Polyethern, Polyestern, Polyether-Polyestern und/oder (Meth)Acryl-Copolymeren mit jeweils mindestens einer Acryloylgruppe der Formel

   R₁R₂C = CR₃-COO-

   worin R₁, R₂ und R₃ gleich oder verschieden sind und stehen für ein Wasserstoffatom oder einen geraden oder verzweigten Alkylrest mit 1 bis 10 Kohlenstoffatomen,
   und gleichzeitig mindestens einer Epoxidgruppe im Molekül, wobei die Acryloylgruppen und Epoxidgruppen im Zahlenverhältnis 2 : 8 bis 8 : 2 vorliegen,
   die erhältlich ist (sind) durch Umsetzung von einem oder mehreren Di- und/oder Polyepoxiden auf der Basis von Polyglycidylethern von aliphatischen, cycloaliphatischen und/oder aromatischen Di- oder Polyolen, mit einem Zahlenmittel des Molekulargewichts (Mn) von bis zu 2000, Polyglycidylestern mit einem Zahlenmittel des Molekulargewichts (Mn) von 500 bis 2000 und/oder Glycidyl-funktionalisierten (Meth)Acryl-Copolymeren mit einem Zahlenmittel des Molekulargewichts (Mn) von 1000 bis 10 000, mit α,β-ethylenisch ungesättigten Monocarbonsäuren mit 2 bis 10 C-Atomen, die weitere ethylenische Doppelbindungen aufweisen können, und
B) ein oder mehrere Polyamine mit mindestens zwei primären Aminfunktionen, die verkappt sein können, im Molekül als Härter, hergestellt durch Umsetzung von α-Dimethyl-m-isopropenylbenzylisocyanat-Copolymeren mit einem Zahlenmittel des Molekulargewichts (Mn) von 1000 bis 10 000, mit Mono- und/oder Diketiminen und/oder Mono- und/oder Dialdiminen, die mindestens eine OH- und/oder sekundäre NH-Gruppe enthalten,
   wobei die Komponenten (A) und (B) im Mengenverhältnis der Äquivalentgewichte von 2 : 0,5 bis 1 : 1,5 vorliegen.

Gegenstand der Erfindung ist ferner ein Überzugsmittel, das die vorstehend beschriebene Bindemittelzusammensetzung und darüber hinaus enthält ein oder mehrere organische Lösemittel, und/oder Wasser sowie gegebenenfalls ein oder mehrere Pigmente und/oder Füllstoffe sowie gegebenenfalls lackübliche Zusatzstoffe.

Die erfindungsgemäße Bindemittelzusammensetzung und das sie enthaltende Überzugsmittel führen bereits bei niedrigen Temperaturen, beispielsweise bei Raumtemperatur, rasch zu vergilbungsfreien, lösemittel- und benzinbeständigen Überzügen mit besonders guten Fülle/Glanz-Eigenschaften, die darüber hinaus eine hohe Flexibilität aufweisen.

Gegenstand der Erfindung ist ferner ein Verfahren zur Herstellung der Bindemittelkomponente (A) der vorstehend beschriebenen Bindemittelzusammensetzung, das dadurch gekennzeichnet ist, daß man ein oder mehrere Di- und/oder Polyepoxide auf der Basis von Polyglycidylethern von aliphatischen, cycloaliphatischen und/oder aromatischen Dioder Polyolen, mit einem Zahlenmittel des Molekulargewichts (Mn) von bis zu 2000, eine oder mehrere Polyglycidylester mit einem Zahlenmittel des Molekulargewichts (Mn) von 500 bis 2000, und/oder ein oder mehrere Glycidyl-funktionalisierte (Meth)Acryl-Copolymere mit einem Zahlenmittel des Molekulargewichts (Mn) von 1000 bis 10 000 mit einer oder mehreren α,β-ethylenisch ungesättigten Monocarbonsäuren mit 2 bis 10 C-Atomen, die weitere ethylenische Doppelbindungen aufweisen können, umsetzt.

Gegenstand der Erfindung ist ferner ein Verfahren zur Herstellung eines Überzugsmittels, wie es vorstehend beschrieben wurde, das dadurch gekennzeichnet ist, daß man die Bindemittelkomponente (A) wie vorstehend angegeben herstellt und mit einem oder mehreren Polyaminen wie in Komponente (B) oben definiert, sowie mit einem oder mehreren organischen Lösemitteln und/oder Wasser, gegebenenfalls einem oder mehreren Pigmenten und/oder Füllstoffen sowie gegebenenfalls lacküblichen Zusatzstoffen vermischt.

Weitere Gegenstände der Erfindung sind
ein Verfahren zur Herstellung von Mehrschicht-Lackierungen durch Auftrag eines Decklacks auf eine lösemittelhaltige und/oder wasserhaltige Grundierung oder Füllerschicht naß-in-naß und anschließendes gemeinsames Einbrennen, das dadurch gekennzeichnet ist, daß man als Decklack ein Pigmente und/oder Füllstoffe enthaltendes Überzugsmittel wie oben definiert verwendet, sowie
ein Verfahren zur Herstellung von Mehrschicht-Lackierungen durch Auftrag eines Klarlacks auf eine lösemittelhaltige und/oder wasserhaltige Basislackschicht naß-in-naß, und anschließendes gemeinsames Einbrennen, das dadurch gekennzeichnet ist, daß man als Klarlack ein transparentes Überzugsmittel wie oben definiert verwendet.

Schließlich betrifft die Erfindung die Verwendung der vorstehend definierten Bindemittelzusammensetzung zur Herstellung von pigmentierten Decklacken oder von pigmentfreien Klarlacken, insbesondere zur Herstellung von bei Temperaturen von 20 bis 80°C härtbaren Deck- oder Klarlacken, sowie zur Herstellung lösemittelbeständiger Überzüge.

Außerdem betrifft die Erfindung die Verwendung des vorstlehend definierten Überzugsmittels zur Herstellung von Mehrschicht-Lackierungen, insbesondere von Kraftfahrzeug-Serien- und -Reparaturlackierungen.

Insbesondere betrifft die Erfindung eine Bindemittelzusammensetzung auf der Basis einer Glycidyl- und Acryloyl-funktionellen Komponente A und einer Polyaminkomponente 8, die,gemäß einer bevorzugten Ausführungsform, als Bindemittelkomponente A eine Glycidyl- und Acryloyl-funktionelle Verbindung mit mindestens je einer funktionellen Gruppe der Formel 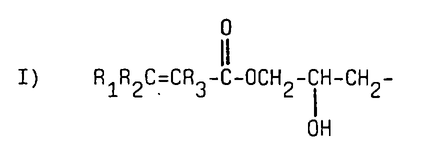 und/oder 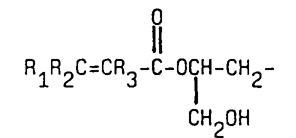 und 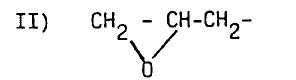 enthält, worin R₁, R₂ und R₃ unabhängig voneinander ein Wasserstoffatom oder ein gerader oder verzweigter Alkylrest mit 1 bis 10 Kohlenstoffatomen sein können; wobei I und II an einen Rest eines oder mehrerer
a) Polyole aus der Gruppe von geraden oder verzweigten cycloaliphatischen, aliphatischen- und/oder aromatischen Di- oder Polyolen mit 2 bis 12 Kohlenstoffatomen mit einem Zahlenmittel des Molekulargewichts (Mn) von bis 2000,
b) Polyester mit einem Zahlenmittel des Molekulargewichts (Mn) von 500 bis 2000 und/oder
c) Poly(meth)acrylsäureester, gegebenenfalls copolymerisiert mit α,β-ungesättigten Monomeren, mit einem Zahlenmittel des Molekulargewichts (Mn) von 1000 bis 10000
gebunden sind;
und als Härterkomponente B eine Polyaminkomponente enthält mit mindestens zwei primären Aminfunktionen, die verkappt sein können, hergestellt durch Umsetzung von TMI-Copolymeren mit einem Zahlenmittel des Molekulargewichts (Mn) von 1000 bis 10000 mit Mono- oder Diketiminen, die entweder eine Hydroxy- oder sekundäre Aminfunktion enthalten.

Das Zahlenverhältnis Epoxid- zu Acryloylgruppen im Bindemittel liegt zwischen 2 : 8 und 8 : 2, bevorzugt zwischen 3 : 7 und 7 : 3. Das Zahlenverhältnis bezieht sich auf das Verhältnis der Gesamtanzahl von Epoxidgruppen zu der Gesamtanzahl von Acryloylgruppen in einem Molekül.

Die Bindemittelkomponente der erfindungsgemäßen Bindemittel, die mindestens je eine Glycidyl- und Acryloylfunktion enthält, kann beispielsweise hergestellt werden durch Umsetzung von Di- oder Polyepoxiden mit α,β-ungesättigten Carbonsäuren unter Öffnung des Oxiranringes. Gebräuchliche Di- oder Polyepoxide sind z.B. Polyglycidylether auf Basis von Diethylenglykol, Dipropylenglykol, Polypropylenglykol mit einem Zahlenmittel des Molgewichts (Mn) bis 2000, Triglycidylether von Glycerin und/oder Di- oder Polyphenolen wie Bisphenol A.

Weitere Beispiele für Di- oder Polyepoxide sind solche auf der Basis von Di- oder Polyglycidylestern. Beispiele hierfür sind Umsetzungsprodukte aus 1-Hydroxy-2,3-epoxypropan mit Phthalsäure oder Terephthalsäure zu Phthal- oder Terephthalsäure-bis-(2,3-epoxypropylester) oder einem Diglycidylether von Bisphenol A mit Trimellithsäureanhydrid zu Polyestern mit einem Zahlenmittel des Molekulargewichts (Mn) von 500 bis 2000.

Ebenfalls verwendbare Beispiele sind Glycidyl-funktionalisierte (Meth)-acrylpolymere. Beispiele hierfür sind Copolymere von Glycidyl(meth)acrylat, 1,2-Epoxybutylacrylat oder 2,3-Epoxycylopentylacrylat. Als Comonomere können Ester der (Meth)acrylsäure wie z.B. Methyl-, Ethyl-, Butyl-, Isobutyl-, Ethylhexyl-, Cyclohexyl- und/oder Laurylacryl gewählt werden, und/oder Hydroxypropyl-Ester, weiterhin aus Styrol, Vinyltoluol und/oder α-Methylstyrol. Das Zahlenmittel des Molgewichts kann zwischen 1000 bis 10000 liegen, bevorzugt bei 2000 bis 5000. Weitere copolymersierbare Glycidylmonomere sind z.B. Allylglycidylether oder 3,4-Epoxy-1-vinylcylohexan. Die Herstellung der Copolymere erfolgt über radikalische Lösungspolymerisation, sie ist dem Fachmann bekannt und bedarf keiner weiteren Erläuterung.

"(Meth)Acryl" soll hier und im folgenden"Acryl und/oder Methacryl" bedeuten.

Die Di- oder Polyepoxide können zur Herstellung der Filmbildnerkomponente der Bindemittel beispielsweise mit ein- oder mehrfach ungesättigten Monocarbonsäuren, z.β. mit 2 bis 10, vorzugsweise 3 bis 6 Kohlenstoffatomen, wie Zimtsäure, Crotonsäure, Citraconsäure, Sorbinsäure, vorzugsweise Acryl und/oder Methacrylsäure umgesetzt werden.

Die erfindungsgemäßen Bindemittelzusammensetzungen können in üblicher Weis zu Überzugsmitteln, beispielsweise Lacken, formuliert werden. Dies erfolgt im allgemeinen durch Zusatz von Lösemitteln und/oder Wasser. Dabei ist es möglich, eine Mischung der Komponenten A und B zu bereiten und diese in üblicher Weise durch den Zusatz von Lösemitteln und/oder Wasser und üblichen Additiven zu Überzugsmitteln aufzuarbeiten. Es besteht jedoch auch die Möglichkeit, zunächst eine der Komponenten A oder B durch Zusatz von Lösemitteln und/oder Wasser und üblichen Additiven aufzubereiten und dann die andere Komponente zuzusetzen.

Geeignete organische Lösemittel für die Herstellung von Überzugsmitteln, beispielsweise Lacken, sind solche, wie sie auch bei der Herstellung der Einzelkomponenten A und B verwendet werden. Beispiele für derartige Lösemittel sind organische Lösemittel, wie aliphatische und aromatische Lösemittel, wie aliphatische und aromatische Kohlenwasserstoffe, beispielsweise Toluol, Xylole, Gemische aliphatischer und/oder aromatischer Kohlenwasserstoffe, Ester, Ether und Alkohole. Es sind dies lackübliche Lösemittel. Zur Herstellung der Überzugsmittel aus den erfindungsgemäßen Bindemitteln können auch wäßrige Lösungen bereitet werden. Hierzu können gegebenenfalls Emulgatoren verwendet werden, wie sie auf dem Lacksektor üblich sind.

Zur Herstellung der Überzugsmittel können übliche Additive zugesetzt werden, wie sie auf dem Lacksektor geläufig sind.

Beispiele für solche Additive sind Pigmente, beispielsweise farbgebende Pigmente, wie Titandioxid oder Ruß und Effektpigmente, wie Metallschuppenpigmente und/oder Perlglanzpigmente. Die erfindungsgemäßen Bindemittelzusammensetzungen eignen sich besonders günstig für Überzugsmittel, die derartige Effektpigmente enthalten. Bevorzugt enthalten sie Effektpigmente zusammen mit farbgebenden Pigmenten oder farbgebende Pigmente zusammen mit Füllstoffen. Weitere Beispiele für Additive sind Füllstoffe, wie z.B. Talkum und Silikate, Weichmacher, Lichtschutzmittel, Stabilisatoren und Verlaufsmittel, wie Silikonöle.

Bei den erfindungsgemäßen Bindemittelzusammensetzungen handelt es sich um sogenannte Zweikomponenten-Systeme. Dies bedeutet, daß die Komponenten A und B getrennt gelagert werden und erst vor der Anwendung bzw. zur Anwendung beispielsweise zur Herstellung von Überzugsmitteln vermischt werden.

Die aus den erfindungsgemäßen Bindemitteln hergestellten Überzugsmittel werden dann auf die gewünschte Applikationsviskosität durch entsprechende Regelung des Zusatzes von Lösemitteln, Wasser und/oder Additiven eingestellt.

Die Überzugsmittel können je nach Mengenverhältnis der Komponente A zur Komponente B und Äquivalentgewicht auf Topfzeiten zwischen 1 und 24 Stunden eingestellt werden, so daß eine lange Verarbeitungsdauer der aus dem Zweikomponenten-Bindemittelsystem fertiggestellten Überzugsmittel gewährleistet ist. Die Applikation der so hergestellten Überzugsmittel kann in üblicher Weise erfolgen, beispielsweise durch Tauchen, Spritzen, Streichen oder auf elektrostatischem Wege.

Die Aushärtung von aus dem Überzugsmittel erstellten Überzügen kann bei einer relativen Luftfeuchte von 20 bis 90 % in einem weiteren Temperaturbereich von 10 bis 180°C, bevorzugt zwischen 20 bis 80°C, erfolgen.

Aus den erfindungsgemäßen Bindemitteln können verschiedene Arten von Überzugsmitteln hergestellt werden, beispielsweise Lacke, die als pigmentierte Decklacke oder auch als Klarlacke bereitet werden können. Sie sind jedoch auch zur Herstellung von beispielsweise Füllern geeignet.

Die aus den erfindungsgemäßen Bindemitteln hergestellten Überzugsmittel sind für Überzüge geeignet, die auf einer Vielzahl von Substraten haften, wie beispielsweise Holz, Textilien, Kunststoff, Glas, Keramik und insbesondere Metall. Die Überzugsmittel können auch im Mehrschichtverfahren eingesetzt werden. So können sie beispielsweise auf Grundierungen, Basislacke, Füller oder auf bereits vorhandene Decklacke aufgetragen werden. Der Auftrag kann entweder auf die gehärteten Vorschichten erfolgen oder naß-in-naß durchgeführt werden, wobei anschließend ein gemeinsames Einbrennen der Mehrschichtüberzüge erfolgt.

Es sind sämtliche üblichen Vorbeschichtungen geeignet.

Werden aus den erfindungsgemäßen Bindemitteln hergestellte Überzugsmittel als Klarlacke formuliert, so können sie bei der Herstellung von Mehrschichtüberzügen beispielsweise auf wäßrige oder nicht-wäßrige Basislacke aufgebracht werden. Das Applizieren der Klarlacke kann, wie erwähnt, nach dem Einbrennen, Trocknen und gegebenenfalls nach kurzem Ablüften naß-in-naß erfolgen, worauf im letzteren Falle anschließend gemeinsam eingebrannt wird.

Im Folgenden werden einige Beispiele für Basislacke aufgeführt, die bevorzugt mit aus den erfindungsgemäßen Bindemitteln bereiteten Klaroder Decklacken beschichtet werden können:

Wasserbasislacke auf der Basis von 50 - 95 Gew.-% eines wässrigen, Epoxid-funktionalisierten Emulsionspolymerisates und 95 bis 5 Gew.-% einer anionischen Polyurethandispersion mit einer Säurezahl von 5 bis 10. Als Anreibeharze für in solchen Wasserbasislacken verwendete Pigmente und Additive eignen sich besonders Poly(meth)acrylatharze (beispielsweise in einer Menge bis zu 20 Gew.-%). Beispiele für solche Wasserbasislacke sind in der DE-OS 3 628 124 beschrieben.

Basislacke auf der Basis von Polyestern mit einer Glasübergangstemperatur von > 30°C, Melaminharzen (z.B. partiell butylierten Melaminharzen), Polyharnstoffplastifizierern (beispielsweise auf der Basis eines Addukts aus Butylurethan und Formaldehyd) und einem Copolymer aus Polyethylen (85 Gew.-%) - Vinylacetal (15 Gew.-%) als Wachsdispersion. Solche Basislacke können übliche Additive, wie Celluloseacetobutyrat (beispielsweise mit unterschiedlichen Molekular-Gewichtsbereichen) enthalten. Beispiele für solche Basislacke sind in der EP-A-187 379 beschrieben.

Ein für Reparaturzwecke geeigneter Wasserbasislack (besonders geeignet für Metallic-Lackierungen) enthält 50 bis 90 Gew.-% Polyurethane mit Carbonatgruppierungen und einem Zahlenmittel des Molgewichts von 70000 bis 500000 auf der Basis von Reaktionsprodukten aus Polyisocyanaten mit Polyhydroxyverbindungen und einem Anteil an Polyhydroxypolycarbonaten und 10 bis 50 Gew.-% Polyurethane mit einem Zahlenmittel des Molgewichts von 20000 bis 60000. Beispiele für derartige Lacke sind in der DE-OS 41 15 015 beschrieben.

Ein Beispiel für einen besonders für Reparaturzwecke geeigneten Wasserbasislack (insbesondere Unifarben) enthält 50 bis 90 Gew.-% Polyurethane mit Carbonatgruppierungen, mit einer Glasübergangstemperatur von < 0°C auf der Basis von Reaktionsprodukten aus Polyisocyanaten mit Polyhydroxylverbindungen, mit einem Anteil an Polyhydroxylcarbonaten und 10 bis 50 Gew.-% von Reaktionsprodukten carboxylfunktioneller Polykondensate und α,β-olefinisch ungesättigter Monomerer mit einer Glasübergangstemperatur von > 0°C in Form einer wäßrigen Dispersion. Beispiele für solche Wasserbasislacke sind in der DE-A-41 15 042 beschrieben.

Ein Beispiel für Basislacke auf Lösemittelbasis, die besonders für Reparaturzwecke geeignet sind, enthält physikalisch trocknende Bindemittel auf der Basis von thermoplastischem Polyester- und/oder Acrylharz im Gemisch mit Celluloseethern bzw. Celluloseestern und/oder Polyvinylacetaten. Ferner enthalten sind selbsthärtende Acrylharzbindemittel, die Farbpigmente enthalten und mit Isocyanat reagierende Wasserstoffatome aufweisen sowie zusätzlich Gemische von Lösungsmitteln gelösten Celluloseethern und/oder Celluloseestern und/oder Cellulosehalbestern. Solche Lacke sind in der DE-OS 29 24 632 beschrieben.

Sämtliche der vorstehenden Basislackformulierungen können übliche Lackadditive enthalten, sowie übliche Füllstoffe und farbgebende Pigmente sowie auch Metallicpigmente, wie Aluminium- bzw. Edelstahlbronzen und andere Effektpigmente.

Beispiele für Basislacke, die mit Klarlacken auf der Basis erfindungsgemäßer Bindemittel beschichtet werden können, sind auch Pulver-Lacke, wie sie beispielsweise in "Products Finishing", April 1976, Seiten 54 bis 56 beschrieben sind.

Ein bevorzugtes Anwendungsgebiet für die erfindungsgemäßen Bindemittel stellt die Bereitstellung von Überzugsmitteln für Lackierungen auf dem Gebiet des Kraftfahrzeugsektors dar. Durch die günstigen Härtungsbedingungen sind diese besonders auf für Kraftfahrzeug-Reparaturlackierungen geeignet.

Die vorliegende Erfindung betrifft somit auch Verfahren zur Herstellung von Überzügen auf verschiedenen Substraten, bei denen auf das Substrat ein aus den erfindungsgemäßen Bindemitteln hergestelltes Überzugsmittel appliziert wird, worauf getrocknet und gehärtet wird. Die Erfindung betrifft auch die Verwendung der erfindungsgemäßen BindemittelZusammensetzung in Klarlacken, Füllern oder Decklacken, insbesondere auf dem Kraftfahrzeugsektor.

In jedem Fall erhält man mit den aus den erfindungsgemäßen Bindemitteln hergestellten Überzugsmitteln Filme mit gutem Glanz, guter Härte und guter Wasser- und Lösemittelbeständigkeit, insbesondere Superbenzinbeständigkeit. Die Aushärtung erfolgt sehr rasch, so ist beispielsweise eine Staubtrocknung schon innerhalb weniger Minuten, wie etwa 10 Minuten, erzielbar.

Die folgenden Beispiele dienen zur Erläuterung der Erfindung. Alle Teile (T) beziehen sich auf das Gewicht.

### Beispiel 1

### 1) Herstellung eines Acryloyl- und Epoxid-funktionalisierten Acrylharzes

### 1a) Herstellung eines Glycidylmethacrylat-Copolymeren

In einem 4 Liter-Dreihalskolben, der mit Rührer, Thermometer, Tropftrichter und einem Rückflußkühler versehen ist, werden 1000 T Xylol vorgelegt und unter Rühren auf 90°C erhietzt. Innerhalb von 5 h wird eine Mischung aus
- 380 T: Glycidylmethacrylat
- 128 T: Butylmethacrylat
- 252 T: Butylacrylat
- 200 T: Styrol und
- 40 T: tert. Butylperoctoat
zugetropft. Das erhaltene epoxyfunktionelle Harz hat eine Viskosität von 70 mPas (25°C) und einen Festkörper von 50,1 % (1h/150°C).

### 1b) Herstellung des Acryloyl- und Epoxidfunktionalisierten Acrylharzes

2000 T des Glycidyl-funktionalisierten Harzes von 1a) werden mit 4,8 T Triphenylphosphit, 0,9 T Methylhydrochinon und 500 T Butylacetat 98/100 in einem 4 Liter-Kolben, der mit Rührer, Thermometer, Tropftrichter und Rückflußkühler versehen ist, unter Rühren auf 90°C erwärmt. Bei dieser Temperatur wird eine Mischung aus 110 g Acrylsäure und 250 g Butylacetat 98/100 innerhalb von 5 h zugetropft, anschließend bis zum Erreichen einer Säurezahl von 1 umgesetzt. Das Harz wird durch Destillation auf einen Festkörper von 60 % eingestellt und hat dann eine Viskosität von 520 mPas.

### 1c) Herstellung eines wäßrig-emulgierten Bindemittels

1800 T des Acryloyl- und Epoxidfunktionalisierten Acrylharzes aus Beispiel 1b) werden durch Destillation auf einen Festkörper von 80 % eingestellt. Zur Herstellung einer wäßrigen Emulsion werden nun 236 g vollentsalztes Wasser mit 0,19 g eines handelsüblichen Polysiloxan-Entschäumers vorgelegt und auf 45°C erhitzt. 510 g des oben erhaltenen Acrylharzes werden mit 20,3 g eines Polyoxyethylenpolyoxypropylenalkylphenol-Emulgators vermischt und auf 75°C erwärmt. Über einen Rotor/Stator-Homogenisierer wird dieses Harz geschert und in dem Wasser/Polysiloxan-Gemisch emulgiert. Die Dosierung erfolgt innerhalb von 8 Minuten. Der Rotor besitzt eine Umdrehungsgeschwindigkeit von 10000 Umdrehungen pro Minute.

Während der Zudosierung wird die Vorlage mit 45°C warmem Wasser gekühlt. Die erhaltene trübweiße Emulsion hat einen Festkörper von 53,7 %, eine Viskosität von 41mPas und eine mittlere Teilchengröße, die mit Hilfe der Photonenkorrelationsspektroskopie bestimmt wurde, von 755 nm.

### Beispiel 2

### 2) Herstellung eines Ketimin-funktionalisierten Acrylharzhärters mit Harnstoffgruppen

### 2a) Herstellung eines TMI-Copolymeren

In einem 4-Liter-Dreihalskolben, der mit Rührer, Thermometer, Tropftrichter und einem Rückflußkühler versehen ist, werden 925 T Xylol vorgelegt und unter Rührern auf Rückfluß erhitzt. Innerhalb von 5 h wird eine Mischung aus
- 250 T: Methylmethacrylat
- 750 T: Isobutylacrylat
- 225 T: m-TMI
- 225 T: Styrol
- 50 T: tert.-Butylperoctoat
zugetropft. Anschließend wird 4 h am Rückfluß gerührt. Das erhaltene Isocyanat-funktionelle Harz wird dann mit Xylol versetzt, bis ein Festkörper von 60 % (lh/150°C) erreicht ist. Das Harz hat dann eine Viskosität von 230 mPas.

### 2b) Herstellung des Ketimins

In einem 2-Liter-Dreihalskolben, der mit Rührer, Thermometer, Tropftrichter und einem Rückflußkühler versehen ist, wurden 312,5 T Dipropylentriamin und 1000 T Methylisobutylketon unter Inertgas vorgelegt und auf Rückfluß erhitzt. Das Reaktionsgemisch wird solange am Rückfluß gerührt, bis kein weiteres Reaktionswasser abgeschieden wird (83,5 T H₂O = 93 % Theorie).

### 2c) Herstellung des Ketimin-funktionalisierten Acrylharzes

In einem 2-Liter-Dreihalskolben, der mit Rührer, Thermometer, Tropftrichter und einem Rückflußkühler versehen ist, werden 248 g des unter 2b) beschriebenen Ketimins unter Inertgas vorgelegt und auf 30°C erhitzt. Innerhalb von 2 h wurden um 1000 g des unter 2a) beschriebenen Isocyanat-terminierten Acrylharzes kontinuierlich zudosiert. Nach beendeter Zugabe wird das Gemisch auf 80°C erhitzt und gerührt, bis kein freies Isocyanat mehr vorhanden ist (keine NCO-Bande im Infrarotspektrum bei 2240 cm⁻¹ mehr sichtbar). Das entstandene Ketimin-funktionalisierte Acrylharz hat dann einen Festkörper von 60,8 % (1h/150°C) und eine Viskosität von 410 mPas.

### 2d) Herstellung einer wäßrigen Emulsion des Harzes unter 2c)

In einem 1-Liter-Kolben wurden 125 g vollentsalztes Wasser, 9,0 g eines Emulgators auf der Basis eines Polyoxypropylenpolyoxyethylensorbitansäurediesters ungesättigter Fettsäuren und 0,1g eines handelsüblichen Polysiloxan-Entschäumers bei 60°C vorgelegt. Das Gemisch wird mit einem Rührer, der mit einer Geschwindigkeit von ca. 7500 h/min. rotiert, gerührt. Innerhalb von drei Minuten werden bei 60°C anschließend 200 g des Ketimin-funktionalisierten Acrylharzes aus 2c), das durch Destillation auf einen Festkörper von 90 % eingeengt und anschließend auf 60°C erwärmt wurde, zugegeben. Die erhaltene milchig-weiße Emulsion hat einen Festkörper von 55,6 % und eine Viskosität von 110 mPas.

### Beispiel 3

### 3) Herstellung eines Ketimin-funktionalisierten Acrylharzes mit Urethangruppierungen

### 3a) Herstellung eines TMI-Copolymeren

In einem 4-Liter-Dreihalskolben, der mit Rührer, Thermometer, Tropftrichter und einem Rückflußkühler versehen ist, werden 800 T Xylol vorgelegt und unter Rühren auf Rückfluß erhitzt. Innerhalb von 5 Stunden wird eine Mischung aus
- 200 T: Methylmethacrylat
- 460 T: Isobutylacrylat
- 500 T: m-TMI
- 40 T: term. Butylperoctoat
zugetropft. Anschließend wird noch 4 Stunden unter Rückfluß gerührt. Das erhaltene Isocyanat-funktionelle Harz wird anschließend mit Xylol versetzt, bis ein Festkörper von 60 % (1h/150°C) erreicht ist. Das Harz hat dann eine Viskosität von 260 mPas.

### 3b) Herstellung eines Ketimins

In einem 2-Liter-Dreihalskolben, der mit Rührer, Thermometer, Tropftrichter und einem Rückflußkühler versehen ist, werden 85 T Monoethanolamin und 280 T Methylisobutylketon unter Inertgas vorgelegt und auf Rückfluß erhitzt. Es wird solange am Rückfluß gerührt, bis kein weiteres Reaktionswasser abgeschieden wird (24,8 T H₂O = 99,1 % der Theorie).

### 3c) Herstellung des Ketimin-funktionalisierten Acrylharzes

In einem 2-Liter-Dreihalskolben, der mit Rührer, Thermomether, Tropftrichter und einem Rückflußkühler versehen ist, werden 340 T des unter 3b) beschriebenen Ketimins vorgelegt und auf 30°C erhitzt. Anschließend werden 33 T einer 10%igen Dibutylzinnlauratlösung in Xylol zugefügt. Innerhalb von 2 Stunden werden nun 1124 T des unter 3a) beschriebenen Isocyanat-funktionellen Acrylharzes kontinuierlich zudosiert. Nach beendeter Zugabe wird das Gemisch auf 80°C erhitzt und gerührt, bis kein freies Isocyanat mehr vorhanden ist (keine NCO-Bande im Infrarotspektrum bei 2240 cm⁻¹ mehr sichtbar). Das entstandene Ketimin-funktionalisierte Acrylharz hat dann einen Festkörper von 56,0 (1h/150°C) und eine Viskosität von 2240 mPas.

### Herstellung von Lacken

### Beispiel 4

### a) Herstellung des Stammlackes:

- 60,24 T: des Glycidyl- und Acryloyl-funktionalisierten Harzes aus Beispiel 1b)
- 0,18 T: Verlaufsmittel auf der Basis eines handelsüblichen Silikonöls (10%ig in Butylacetat 90/100)
- 0,45 T: einer Lösung eines sterisch gehinderten Amins (UV-Stabilisator)
- 0,45 T: eines Benzotriazolderivates
- 38,68 T: Verdünnungsmittel:
10% Butylglykolacetat
25 % Butylacetat 98/100
40 % Methoxypropylacetat
25% Xylol
werden homogen vermischt.

### b) Herstellung der Härterlösung:

- 80,2 T: des Harnstoff-verbrückten Ketiminfunktionalisierten Acrylharzes aus Beispiel 2c)
- 19,8 T: Verdünnungsmittel (wie oben)

### c) Lackherstellung:

2 Teile des Stammlacks aus 4a) und 1 Teil der Härterlösung aus Beispiel 4b) wurden homogen miteinander vermischt und mit der vorstehenden Verdünnung auf eine Spritzviskosität von 18" nach DIN 53211 eingestellt und auf einem handelsüblichen Basislack auf der Basis organischer Lösemittel naß-in-naß in zwei Spritzgängen mit einer Trockenfilmdicke von 40 bis 100 µm appliziert.

### Beispiel 5

### a) Herstellung des Stammlacks:

- 67,09 T: des Glycidyl- und Acryloyl-funktionalisierten Harzes aus Beispiel 1b)
- 0,15 T: Verlaufsmittel auf der Basis eines handelsüblichen Silikonöls (10%ig in Butylacetat 98/100)
- 0,36 T: einer Lösung eines sterisch gehinderten Amins
- 0,36 T: eines Benzotriazolderivates
- 32,04 T: Verdünnungsmittel (siehe oben)
werden homogen vermischt.

### b) Herstellung der Härterlösung:

- 57 T: des Urethan-verbrückten Ketimin-funktionalisierten Acrylharzes aus Beispiel 3c)
- 43 T: der obengenannten Verdünnung

### c) Lackherstellung:

Der Stammlack aus Beispiel 5a) und die Härterlösung aus Beispiel 5) werden homogen miteinander vermischt und mit der vorstehenden Verdünnung auf eine Spritzviskosität von 18" nach DIN 53211 eingestellt und auf einem handelsüblichen Basislack auf der Basis organischer Lösemittel naß-in-naß in zwei bis drei Spritzgängen mit einer Trockenfilmdicke von 40 bis 100 µm appliziert.

### Beispiel 6:

20 g der wäßrigen Harzlösung aus Beispiel lc) und 7 g der wäßrigen Härterlösung aus 2d) werden vermischt und auf eine Glasplatte mit einer Schichtdicke von 60 µm aufgerakelt.

### Beurteilung der Lackfilme

Die Lacke aus den Beispielen 4c), 5c) und 6) werden 30 Minuten bei 60°C eingebrannt. Die Lackfilme zeigten 1 Stunde nach dem Einbrennen eine sehr gute Benzinbeständigkeit, einen guten Slip und eine sehr geringe Kratzempfindlichkeit.

## Patentansprüche

1. Bindemittelzusammensetzung für Lösemittel und/oder Wasser enthaltende Überzugsmittel, enthaltend
A) eine oder mehrere Bindemittelkomponenten auf der Basis von Polyethern, Polyestern, Polyether-Polyestern und/oder (Meth)Acryl-Copolymeren mit jeweils mindestens einer Acryloylgruppe der Formel
R₁R₂C = CR₃-COO-
worin R₁, R₂ und R₃ gleich oder verschieden sind und stehen für ein Wasserstoffatom oder einen geraden oder verzweigten Alkylrest mit 1 bis 10 Kohlenstoffatomen,
und gleichzeitig mindestens einer Epoxidgruppe im Molekül, wobei die Acryloylgruppen und Epoxidgruppen im Zahlenverhältnis 2 : 8 bis 8 : 2 vorliegen,
die erhältlich ist (sind) durch Umsetzung von einem oder mehreren Di- und/oder Polyepoxiden auf der Basis von Polyglycidylethern von aliphatischen, cycloaliphatischen und/oder aromatischen Di- oder Polyolen, mit einem Zahlenmittel des Molekulargewichts (Mn) von bis zu 2000, Polyglycidylestern mit einem Zahlenmittel des Molekulargewichts (Mn) von 500 bis 2000 und/oder Glycidylfunktionalisierten (Meth)Acryl-Copolymeren mit einem Zahlenmittel des Molekulargewichts (Mn) von 1000 bis 10 000, mit α,β-ethylenisch ungesättigten Monocarbonsäuren mit 2 bis 10 C-Atomen, die weitere ethylenische Doppelbindungen aufweisen können,und
B) ein oder mehrere Polyamine mit mindestens zwei primären Aminfunktionen, die verkappt sein können, im Molekül als Härter, hergestellt durch Umsetzung von α-Dimethyl-m-isopropenylbenzylisocyanat-Copolymeren mit einem Zahlenmittel des Molekulargewichts (Mn) von 1000 bis 10 000, mit Mono- und/oder Diketiminen und/oder Mono- und/oder Dialdiminen, die mindestens eine OH- und/oder sekundäre NH-Gruppe enthalten,
wobei die Komponenten (A) und (B) im Mengenverhältnis der Äquivalentgewichte von 2 : 0,5 bis 1 : 1,5 vorliegen.

2. Überzugsmittel, enthaltend die Bindemittelzusammensetzung nach Anspruch 1 und darüber hinaus ein oder mehrere organische Lösemittel und/oder Wasser sowie gegebenenfalls ein oder mehrere Pigmente und/oder Füllstoffe sowie gegebenenfalls lackübliche Zusatzstoffe.

3. Verfahren zur Herstellung der Bindemittelkomponente (A) nach Anspruch 1, dadurch gekennzeichnet, daß man ein oder mehrere Di- und/oder Polyepoxide auf der Basis von Polyglycidylethern von aliphatischen, cycloaliphatischen und/oder aromatischen Di- oder Polyolen, mit einem Zahlenmittel des Molekulargewichts (Mn) von bis zu 2000, einen oder mehrere Polyglycidylester mit einem Zahlenmittel des Molekulargewichts (Mn) von 500 bis 2000, und/oder ein oder mehrere Glycidyl-funktionalisierte (Meth)Acryl-Copolymere mit einem Zahlenmittel des Molekulargewichts (Mn) von 1000 bis 10 000 mit einer oder mehreren α,β-ethylenisch ungesättigten Monocarbonsäuren mit 2 bis 10 C-Atomen, die weitere ethylenische Doppelbindungen aufweisen können, umsetzt.

4. Verfahren zur Herstellung eines Überzugsmittel nach Anspruch 2, dadurch gekennzeichnet, daß man die Bindemittelkomponente (A) gemäß Anspruch 3 herstellt und mit einem oder mehreren Polyaminen wie in Komponente (B) von Anspruch 1 definiert, sowie mit einem oder mehreren organischen Lösemitteln und/oder Wasser, gegebenenfalls einem oder mehreren Pigmenten und/oder Füllstoffen sowie gegebenenfalls lacküblichen Zusatzstoffen vermischt.

5. Verfahren zur Herstellung von Mehrschicht-Lackierungen durch Auftrag eines Decklacks auf eine lösemittelhaltige und/oder wasserhaltige Grundierung oder Füllerschicht naß-in-naß und anschließendes gemeinsames Einbrennen, dadurch gekennzeichnet, daß man als Decklack ein Pigmente und/oder Füllstoffe enthaltendes Überzugsmittel nach Anspruch 2 verwendet.

6. Verfahren zur Herstellung von Mehrschicht-Lackierungen durch Auftrag eines Klarlacks auf eine lösemittelhaltige und/oder wasserhaltige Basislackschicht naß-in-naß, und anschließendes gemeinsames Einbrennen, dadurch gekennzeichnet, daß man als Klarlack ein transparentes Überzugsmittel nach Anspruch 2 verwendet.

7. Verwendung der Bindemittelzusammensetzung nach Anspruch 1 zur Herstellung von pigmentierten Decklacken.

8. Verwendung der Bindemittelzusammensetzung nach Anspruch 1 zur Herstellung von pigmentfreien Klarlacken.

9. Verwendung nach einem der Ansprüche 7 und 8 zur Herstellung von bei Temperaturen von 20 bis 80°C härtbaren Deck- oder Klarlacken.

10. Verwendung der Bindemittelzusammensetzung nach Anspruch 1 zur Herstellung lösemittelbeständiger Überzüge.

11. Verwendung der Überzugsmittel nach Anspruch 2 zur Herstellung von Mehrschichtlackierungen.

12. Verwendung der Überzugsmittel nach Anspruch 2 zur Herstellung von Kraftfahrzeug-Serien- und -Reparaturlackierungen.

## Claims

1. Binder composition for coating compositions containing solvent and/or water, which binder composition contains
A) one or more binder components based on polyethers, polyesters, polyether/polyesters and/or (meth)acrylic copolymers, each having at least one acryloyl group of the formula
R₁R₂C=CR₃-COO-
in which R₁, R₂ and R₃ are identical or different and denote a hydrogen atom or a linear or branched alkyl residue with 1 to 10 carbon atoms,
and simultaneously at least one epoxide group per molecule, wherein the acryloyl groups and epoxide groups are present in a numerical ratio of 2:8 to 8:2,
which is (are) obtainable by reacting one or more di-and/or polyepoxides based on polyglycidyl ethers of aliphatic, cycloaliphatic and/or aromatic di- or polyols, with a number average molecular weight (Mₙ) of up to 2000, polyglycidyl esters with a number average molecular weight (Mₙ) of 500 to 2000 and/or glycidyl-functionalised (meth)acrylic copolymers with a number average molecular weight (Mₙ) of 1000 to 10000, with α,β-ethylenically unsaturated monocarboxylic acids with 2 to 10 C atoms, which may have further ethylenic double bonds, and
B) one or more polyamines with at least two primary amine functional groups, which may be capped, per molecule as the hardener, produced by reacting α-dimethyl-m-isopropenylbenzyl isocyanate copolymers with a number average molecular weight (Mₙ) of 1000 to 10000, with mono- and/or diketimines and/or monoand/or dialdimines, which contain at least one OH and/or secondary NH group,
wherein components (A) and (B) are present in an equivalent weight quantity ratio of 2:0.5 to 1:1.5.

2. Coating compositions containing the binder composition according to claim 1 and additionally one or more organic solvents and/or water, optionally together with one or more pigments and/or extenders, optionally together with conventional lacquer additives.

3. Process for the production of binder component (A) according to claim 1, characterised in that one or more di- and/or polyepoxides based on polyglycidyl ethers of aliphatic, cycloaliphatic and/or aromatic di- or polyols, with a number average molecular weight (Mₙ) of up to 2000, one or more polyglycidyl esters with a number average molecular weight (Mₙ) of 500 to 2000 and/or one or more glycidyl-functionalised (meth)acrylic copolymers with a number average molecular weight (Mₙ) of 1000 to 10000, with one or more α,β-ethylenically unsaturated monocarboxylic acids with 2 to 10 C atoms, which may have further ethylenic double bonds.

4. Process for the production of a coating composition according to claim 2, characterised in that binder component (A) according to claim 3 is produced and mixed with one or more polyamines as defined in component (B) of claim 1, together with one or more organic solvents and/or water, optionally one or more pigments and/or extenders, optionally together with conventional lacquer additives.

5. Process for the production of multi-layer lacquer coatings by applying a topcoat lacquer wet-on-wet onto a solvent-based and/or water-based primer or surfacer layer and subsequently stoving them together, characterised in that the topcoat lacquer used is a coating composition according to claim 2 containing pigments and/or extenders.

6. Process for the production of multi-layer lacquer coatings by applying a clear lacquer wet-on-wet onto a solvent-based and/or water-based base lacquer layer and subsequently stoving them together, characterised in that the clear lacquer used is a transparent coating composition according to claim 2.

7. Use of the binder composition according to claim 1 for the production of pigmented topcoat lacquers.

8. Use of the binder composition according to claim 1 for the production of pigment-free clear lacquers.

9. Use according to one of claims 7 and 8 for the production of topcoat or clear lacquers curable at temperatures of 20 to 80°C.

10. Use of the binder composition according to claim 1 for the production of solvent-resistant coatings.

11. Use of the coating compositions according to claim 2 for the production of multi-layer lacquer coatings.

12. Use of the coating compositions according to claim 2 for the production of automotive original and repair lacquer coatings.

## Revendications

1. Composition de liant pour compositions de revêtement comprenant des solvants et/ou de l'eau, contenant
A) un ou plusieurs composants de liant à base de polyéthers, polyesters, polyéther-polyesters et/ou copolymères (méth)acryliques ayant dans chaque cas au moins un groupe acryloyle de formule
R₁R₂C = CR₃-COO-
où R₁, R₂ et R₃ sont identiques ou différents et représentent un atome d'hydrogène ou un reste alkyle linéaire ou ramifié ayant 1 à 10 atomes de carbone,
et simultanément au moins un groupe époxyde dans la molécule, tandis que les groupes acryloyle et les groupes époxyde sont dans le rapport numérique de 2 : 8 à 8 : 2,
qui peu(ven)t être obtenu(s) par réaction d'un ou plusieurs di- et/ou polyépoxydes à base d'éthers polyglycidyliques de di- ou polyols aliphatiques, cycloaliphatiques et/ou aromatiques, ayant une moyenne numérique de masses moléculaires (Mn) allant jusqu'à 2000, esters poylglycidyliques ayant une moyenne numérique de masses moléculaires (Mn) de 500 à 2000 et/ou copolymères (méth)acryliques à fonctionnalité glycidyle ayant une moyenne numérique de masses moléculaires (Mn) de 1000 à 10 000, avec des acides monocarboxyliques à insaturation α,β-éthylénique ayant 2 à 10 atomes de carbone, pouvant présenter en outre des doubles liaisons éthyléniques, et
B) une ou plusieurs polyamines ayant au moins deux fonctions amine primaire, qui peuvent être masquées, dans la molécule à titre de durcisseurs, préparées par réaction de copolymères d'a-diméthyl-m-isopropénylbenzylisocyanate ayant une moyenne numérique des masses moléculaires (Mn) de 1000 à 10 000, avec des mon- et/ou dicétimines et/ou des mono- et/ou dialdimines, contenant au moins un groupe OH et/ou NH secondaire,
les composants (A) et (B) étant dans la proportion de poids d'équivalents de 2 : 0,5 à 1 : 1,5.

2. Composition de revêtement, contenant la composition de liant selon la revendication 1 et en outre un ou plusieurs solvants organiques et/ou de l'eau, ainsi qu'éventuellement un ou plusieurs pigments et/ou charges, ainsi qu'éventuellement des additifs classiques pour les laques.

3. Procédé pour la préparation du composant de liant (A) selon la revendication 1, caractérisé en ce qu'on fait réagir un ou plusieurs di- et/ou polyépoxydes à base d'éthers polyglycidyliques de di- ou polyols aliphatiques, cycloaliphatiques et/ou aromatiques, ayant une moyenne numérique de masses moléculaires (Mn) allant jusqu'à 2000, un ou plusieurs esters poylglycidyliques ayant une moyenne numérique de masses moléculaires (Mn) de 500 à 2000 et/ou un ou plusieurs copolymères (méth)acryliques à fonctionnalité glycidyle ayant une moyenne numérique de masses moléculaires (Mn) de 1000 à 10 000, avec un ou plusieurs acides monocarboxyliques à insaturation α,β-éthylénique ayant 2 à 10 atomes de carbone, pouvant présenter en outre des doubles liaisons éthyléniques.

4. Procédé pour la préparation d'une composition de revêtement selon la revendication 2, caractérisé en ce qu'on prépare le composant de liant (A) selon la revendication 3 et on le mélange avec une ou plusieurs polyamines telles que définies dans le composant (B) selon la revendication 1, ainsi qu'avec un ou plusieurs solvants organiques et/ou de l'eau, éventuellement avec un ou plusieurs pigments et/ou charges, ainsi qu'éventuellement avec des additifs classiques pour les laques.

5. Procédé pour la préparation de laques multicouches par application au mouillé-sur-mouillé d'une laque de couverture sur un fond ou une couche de garnissage contenant un solvant et/ou contenant de l'eau et ensuite cuisson de l'ensemble, caractérisé en ce qu'on emploie comme laque de couverture une composition de revêtement contenant des pigments et/ou des charges selon la revendication 2.

6. Procédé pour la préparation de laques multicouches par application au mouillé-sur-mouillé d'une laque transparente sur une couche de laque de base contenant un solvant et/ou contenant de l'eau, et ensuite cuisson de l'ensemble, caractérisé en ce qu'on emploie comme laque transparente une composition de revêtement transparente selon la revendication 2.

7. Utilisation de la composition de liant selon la revendication 1 pour la préparation de laques de finition pigmentées.

8. Utilisation de la composition de liant selon la revendication 1 pour la préparation de laques transparentes exemptes de pigments.

9. Utilisation selon l'une des revendications 7 et 8 pour la préparation de laques de finition ou de laques transparentes durcissables à desd températures de 20 à 80°C.

10. Utilisation de la composition de liant selon la revendication 1 pour la préparation de revêtements résistants aux solvants.

11. Utilisation de la composition de revêtement selon la revendication 2 pour la préparation de laquages multicouches.

12. Utilisation de la composition de revêtement selon la revendication 2 pour la préparation de laquages de série et de laquages de réparation pour véhicules automobiles.
